# EUROPÄISCHE PATENTSCHRIFT

(11) **EP 0 868 095 B1**
(45) Veröffentlichungstag und Bekanntmachung des Hinweises auf die Patenterteilung: **27.02.2008**
(21) Anmeldenummer: 98104961.2
(22) Anmeldetag: 18.03.1998
(51) Int. Cl.: H04Q 3/00, H04Q 3/545

(54) **Verfahren und Kommunikationssystem zur Steuerung der Ausgabe von Rückmeldeinformationen**
Method and communications system for controlling the sending of acknowledgement signals
Procédé et système de communication pour le contrôle de la distribution d'informations de retour

(30) Priorität: 25.03.1997 DE 19712533
(43) Veröffentlichungstag der Anmeldung: 30.09.1998
(73) Patentinhaber: SIEMENS AKTIENGESELLSCHAFT, 80333 München (DE)
(72) Erfinder: Ermann, Berthold, 48249 Dülmen (DE); Kotz, Angelika, 44867 Bochum (DE); Leimkötter, Ulrich, 45888 Gelsenkirchen (DE)

(56) Entgegenhaltungen:
- EP-A- 0 529 343
- EP-A- 0 619 683
- EP-A- 0 697 796

## Beschreibung

Die vorliegende Erfindung betrifft ein Kommunikationssystem, insbesondere eine Telefon-Nebenstellenanlage, sowie ein Verfahren zur Steuerung der Ausgabe von Rückmeldeinformationen, insbesondere Zustandsmeldungen, von dem Kommunikationssystem an Endgeräte, die an das Kommunikationssystem angeschlossen sind.

Kommunikationssysteme dienen allgemein zur Verbindung von Telefon-Endgeräten untereinander und zur Verbindung dieser Endgeräte mit Kommunikationsnetzen, insbesondere öffentlichen Netzen.

Ein Kommunikationssystem besteht im Prinzip aus mehreren vermittlungstechnischen Funktionseinheiten sowie einer programmierbaren Datenverarbeitungseinrichtung, die die vermittlungstechnischen Funktionseinheiten steuert und alle vermittlungstechnischen Abläufe überwacht. Aus der DE-OS-3 804 819 ist ein Kommunikationssystem bekannt, welches eine zentrale Steuereinrichtung, d.h. einen zentralen Hauptprozessor, sowie eine Vielzahl von zur Entlastung der zentralen Steuereinrichtung dienende peripheren Baugruppen-Steuereinrichtungen, d.h. Peripherie-Prozessoren, aufweist. Der Hauptprozessor sowie die einzelnen Peripherie-Prozessoren sind selbständige programmgesteuerte Verarbeitungseinrichtungen, die insbesondere über eine (serielle) Datenübertragungsstrecke miteinander verbunden sind. Zur Koordination von quasi gleichzeitig anfallenden und zu erledigenden Einzelaufgaben ist die Prozessoreinrichtung, die den zentralen Hauptprozessor sowie die mehreren Peripherie-Prozessoren umfaßt, mit einem Betriebssystem, z.B. dem COSMOS-Betriebssystem, versehen. Die wesentliche Aufgabe des Betriebssystems besteht darin, in Abhängigkeit von eingetroffenen und in dem Kommunikationssystem intern gebildeten Anreizinformationen unterschiedliche Programm-Module einem Systemprozessor zur Ausführung zuzuweisen.

Die Anreizinformationen werden insbesondere von den an das Kommunikationssystem angeschlossenen Endgeräten im Rahmen einer Verbindungssignalisierung erzeugt und an das Kommunikationssystem übermittelt. Diese Anreizinformationen bezeichnen in der Regel auf die Vermittlungstechnik bezogene Programm-Module, wobei - wie beispielsweise auch in der EP 04 727 75 beschrieben - in der zur zentralen Steuerung dienenden Prozessoreinrichtung die einzelnen Programm-Module in Abhängigkeit von dem Programm-Modulen zugeordneten Prioritäten zur Ausführung kommen.

Aus der Druckschrift EP-A-0619683A2 Leimkötter et al. "Programmgesteuerte Kommunikationsanlage" ist ein solches Kommunikationssystem bekannt, bei dem Anreizinformationen von Endgeräten zu dem Kommunikationssystem übertragen und dort verarbeitet werden. Dazu werden die Anreize in einem Anreizspeicher, der als Schiebespeicher ausgeführt ist, zwischengespeichert und durch ein niederpriores Arbitrierungsprogrammmodul entnommen und in interne Anreize umgesetzt.

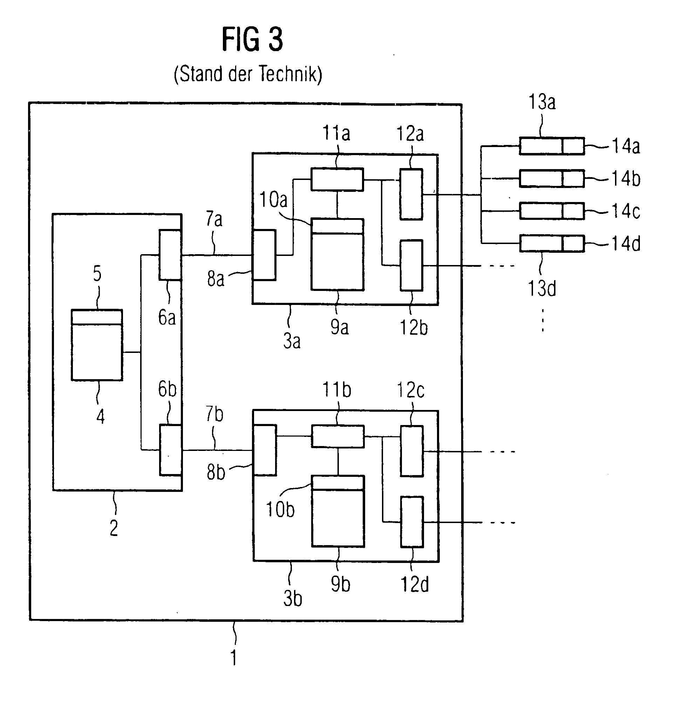

Die prioritätsgesteuerte Ausführung der einzelnen Programm-Module ist beispielsweise auch aus der DE-C1-44 17 777 bekannt. Fig. 3 zeigt den aus dieser Druckschrift bekannten prinzipiellen Aufbau eines Kommunikationssystems. Das Kommunikationssystem 1 weist eine (nachfolgend lediglich als Hauptprozessor bezeichnete) Hauptprozessoreinrichtung 2 und mehrere (nachfolgend lediglich als Peripherie-Prozessoren bezeichnete) Peripherie-Prozessoreinrichtungen 3a, 3b auf, von denen in Fig. 3 insbesondere zwei Peripherie-Prozessoren dargestellt sind. Jeder dieser Peripherie-Prozessoren 3a, 3b kann auf einer Flachbaugruppe angeordnet sein. Jeder Peripherie-Prozessor 3a bzw. 3b umfaßt Übertragungseinheiten 12a, 12b bzw. 12c, 12d, an die jeweils mehrere (Telefon-) Endgeräte 13a - 13d angeschlossen sind. An jedes dieser Endgeräte können mehrere, insbesondere zwei, Konsolen 14a - 14d angeschlossen sein, über die zusätzliche Funktionen, wie z.B. die Kommunikation mit einer Sekretärin am Arbeitsplatz, zugängig sind. Diese an die Endgeräte 13a - 13d anschließbaren Konsolen 14a - 14d werden auch als Optionen bezeichnet.

Jeder Peripherie-Prozessor 3a, 3b weist einen Systemprozessor 9a, 9b sowie einen dem Systemprozessor zugeordneten Systemspeicher 10a, 10b auf. Die Systemspeicher 10a, 10b sind insbesondere Halbleiterspeicher, in denen Programme und Daten abgelegt sind. Jeder Peripherie-Prozessor 3a, 3b wird von einer Peripherie-Steuerung 11a bzw. 11b gesteuert, die insbesondere die Übertragung der Informationen zwischen den Endgeräten und den Peripherie-Prozessoren einerseits sowie den Peripherie-Prozessoren unddem Hauptprozessor andererseits steuern.

Im Rahmen einer Verbindungssignalisierung übermitteln die an einen Peripherie-Prozessor 3a bzw. 3b angeschlossenen Endgeräte 13a - 13d Anreizinformationen in Form einer Vielzahl von Meldungsworten. Diese Anreizinformationen werden von der entsprechenden Übertragungseinheit 12a, 12b, 12c bzw. 12d empfangen und der Peripherie-Steuerung 11a bzw. 11b zugeführt. Die Systemprozessoren 9a bzw. 9b bearbeiten die auf diese Weise zugeführten Anreizinformationen. Über die Peripherie-Steuerungen 11a bzw. 11b werden die Anreizinformationen nach Verarbeitung durch die Systemprozessoren 9a bzw. 9b über eine entsprechende Übertragungseinheit 8a bzw. 8b und einer Datenübertragungsstrecke 7a bzw. 7b an entsprechende Empfangseinheiten 6a, 6b des Hauptprozessors 2 übertragen. Die Übertragung über die Datenübertragungsstrecke 7a, 7b erfolgt dabei insbesondere in Form eines seriellen Datenübertragung im sogenannten HDLC-Format (High Level Data Link Control).

Der Hauptprozessor 2 weist ebenfalls einen Systemprozessor 4 und einen zugeordneten Systemspeicher 5 auf, der die über die Datenübertragungsstrecke 7a, 7b übertragenen Informationen verarbeitet.

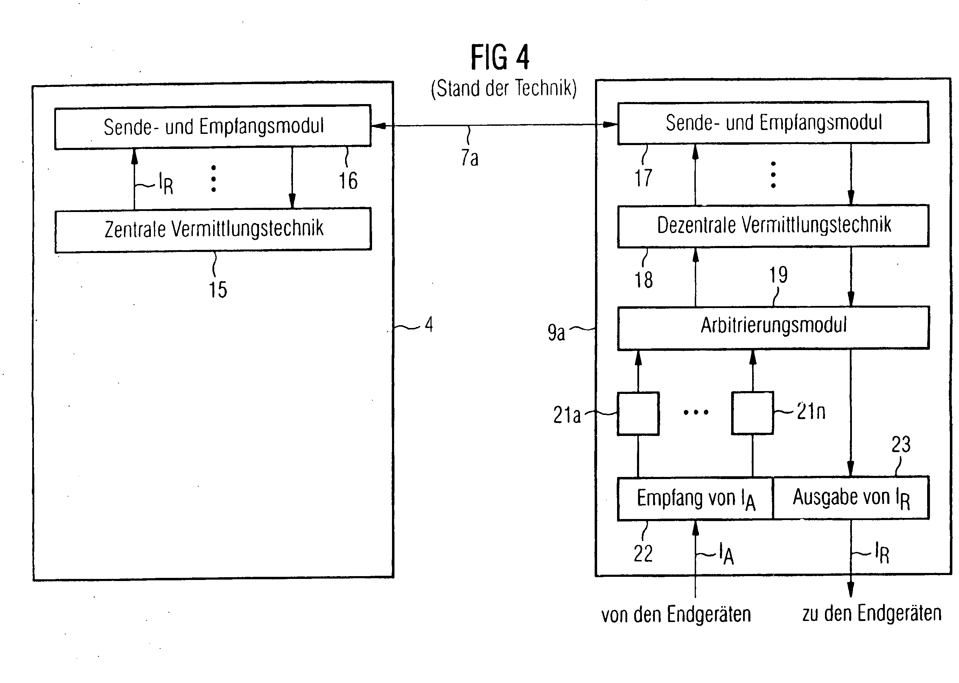

Fig. 4 zeigt am Beispiel des in Fig. 3 dargestellten Systemprozessors 9a des ersten Peripherie-Prozessors 3a die Verarbeitung von Anreizinformationen der an den Peripherie-Prozessor 3a angeschlossenen Endgeräten durch die in dem Systemprozessor 9a des Peripherie-Prozessors 3a enthaltenen Programm-Module. Dabei sind in Fig. 4 lediglich die für das Verständnis der vorliegenden Erfindung erforderlichen Programm-Module dargestellt.

Sowohl die Peripherie-Prozessoren als auch der Hauptprozessor werden von einem (Multitasking-) Betriebssystem verwaltet, welches eine prioritätengesteuerte Verarbeitung der einzelnen Programm-Module ermöglicht. D.h., die wesentliche Aufgabe des Betriebssystems besteht darin, in Abhängigkeit von den in dem Kommunikationssystem zu verarbeitenden Informationen dem entsprechenden Systemprozessor die einzelnen Programm-Module in vorgegebener Reihenfolge zur Ausführung zuzuweisen.

Wie bereits unter Bezugnahme auf Fig. 3 erläutert worden ist, werden die von den Endgeräten 13a - 13d gelieferten Anreizinformationen in der Peripherie-Steuerung 11a der entsprechenden Peripherie-Prozessoreinrichtung 3a zwischengespeichert. Diese zwischengespeicherten Anreizinformationen I_{A} werden einem Anreizinformation-Empfangsmodul 22 zugeführt, wobei das Anreizinformation-Empfangsmodul 22 erst dann ausgeführt wird, d.h. die in der Peripherie-Steuerung 11a zwischengespeicherten Anreizinformationen I_{A} ausgelesen werden, wenn das Anreizinformation-Empfangsmodul 22 in der Prozeßliste des Betriebssystems des Systemprozessors 9a dasjenige Programm-Modul mit der höchsten Priorität ist. Dem Anreizinformation-Empfangsmodul 22 ist im allgemeinen eine relativ hohe Priorität zugewiesen. Aufgrund des Anreizinformation-Empfangsmoduls 22 werden die in einer Vielzahl von Meldungsworten vorliegenden Anreizinformationen I_{A} in dem Systemspeicher 10a (vergleiche Fig. 3) des Systemprozessors 9a der Peripherie-Prozessoreinrichtung 3a unter einer bestimmten Adresse hinterlegt, und der dieser Adresse entsprechende Adressenwert wird endgerätespezifisch in einem von mehreren Warteschlangen-Speichern 21a - 21n abgespeichert. Diese Warteschlangen-Speicher 21a - 21n sind als FIFO-Speicher ausgebildet, wobei für jeden Teilnehmeranschluß des in Fig. 3 gezeigten Kommunikationssystems 1 ein individueller Warteschlangen-Speicher 21a - 21n vorgesehen ist.

Der Systemprozessor 9a der in Fig. 3 gezeigten Peripherie-Prozessoreinrichtung 3a weist zudem ein Arbitrierungsmodul 19 auf, dem eine sehr niedrige Priorität zugewiesen ist. Da allgemein ein Programm-Modul unterbrochen wird, sobald ein Modul mit einer höheren Priorität in die Prozeßliste des entsprechenden Betriebssystems eingetragen worden ist, kommt das im allgemeinen die niedrigste Priorität aufweisende Arbitrierungsmodul 19 nur dann zur Ausführung, wenn kein höherpriores Programm-Modul in der Prozeßliste des Betriebssystems vermerkt ist. Das Arbitrierungsmodul 19 legt im Prinzip die Reihenfolge der von dem Peripherie-Prozessor sowie dem Hauptprozessor zu verarbeitenden Anreizinformationen fest. Das Arbitrierungsmodul 19 liest dabei die in den Warteschlangen-Speichern 21a - 21n gespeicherten Adressenwerte zyklisch, d.h. periodisch aus, wobei innerhalb einer Arbitrierungsperiode jeweils nur ein Anreiz pro Teilnehmeranschluß, d.h. ein Adressenwert aus den endgerätespezifischen Warteschlangen-Speichern 21a - 21n ausgelesen wird. Abhängig von dem durch das Arbitrierungsmodul 19 gelesenen Adressenwerten wird die in dem Systemspeicher 10a des Systemprozessors 9a unter der entsprechenden Adresse abgelegte Anreizinformation gelesen und ausgewertet.

Sämtliche Anreizinformationen, die keine zentrale Wirkung haben, werden unmittelbar von einem dezentralen Vermittlungstechnikmodul 18 verarbeitet. Anreizinformationen ohne zentraler Wirkung sind beispielsweise Anreize, die ein angeschlossenes Endgerät sowohl hinsichtlich seiner Tastatur als auch seiner Anzeige komplett belegen, wie beispielsweise die Lautstärkeneinstellung oder die Systemanmeldung eines Endgerätes

Anreizinformationen mit zentraler Wirkung werden hingegen von dem dezentralen Vermittlungstechnikmodul 18 abgewiesen und schließlich an ein Sende- und Empfangsmodul 17 übermittelt, welches diese Anreizinformationen über die in Fig. 4 gezeigte Datenübertragungsstrecke 7a an den Systemprozessor 4 der Hauptprozessoreinrichtung 2 überträgt. Dabei können insbesondere zwischen dem dezentralen Vermittlungstechnikmodul 18 und dem Sende- und Empfangsmodul 17 weitere Systemprozessoreinheiten, wie z.B. insbesondere weitere endgerätespezifische Warteschlange-Speicher in Kombination mit einem weiteren Arbitrierungsmodul, vorgesehen sein.

Das Sende- und Empfangsmodul 17 übermittelt periodisch eine HDLC-Meldung über die Datenübertragungsstrecke 7a an ein entsprechend in dem Systemprozessor 4 der Hauptprozessoreinrichtung 2 (vergleiche Fig. 3) vorgesehenes Sende- und Empfangsmodul 16. Dabei wird pro Übertragungszyklus lediglich eine Anreizinformation je Warteschlangen-Speicher eines Endgerätes komprimiert übertragen.

Das hauptprozessorseitige Sende- und Empfangsmodul 16 verarbeitet wiederum zyklisch, d.h. periodisch die über die Datenübertragungsstrecke 7a übertragenen HDLC-Meldungen und führt diese einem zentralen Vermittlungstechnikmodul 15 zu. Zwischen dem Sende- und Empfangsmodul 16 sowie dem zentralen Vermittlungstechnikmodul 15 sind insbesondere wiederum (nicht gezeigte) endgerätespezifische Warteschlangen-Speicher in Kombination mit einem entsprechenden Arbitrierungsmodul vorgesehen, so daß der zentralen Vermittlungstechnik 15 lediglich eine Anreizinformation pro Endgerät je Verarbeitungszyklus zugeführt wird.

Das zentrale Vermittlungstechnikmodul 15 verarbeitet die ihm auf diese Weise zugeführten zentralen Anreizinformationen.

Im Gegenzug zu den von den Endgeräten an das Kommunikationssystem übertragenen Anreizinformationen werden von dem Kommunikationssystem entsprechende Rückmeldeinformationen an die Endgeräte übertragen. Dabei handelt es sich insbesondere um Zustandsmeldungen des Kommunikationssystems, die beispielsweise nach Empfang durch die an das Kommunikationssystem angeschlossenen Endgeräte dort durch Aufleuchten entsprechender Zustands-Leuchtdioden wiedergegeben werden. Durch Aufleuchten der entsprechenden Leuchtdioden an den einzelnen Endgeräten bzw. einzelnen Konsolen der Endgeräte werden somit allgemein bestimmte Funktionen, Dienste oder auch Teilnehmer des Kommunikationssystems optisch angezeigt. Diese Zustandsmeldungen werden insbesondere in Form von Rückmeldeinformationen I_{R} von der zentralen Vermittlungstechnik 15 des in Fig. 3 gezeigten Hauptprozessors 2 erzeugt, über die Datenübertragungsstrecke 7a bzw. 7b an die entsprechende Peripherie-Prozessoreinheit 3a bzw. 3b übertragen, in dem Systemprozessor 9a bzw. 9b der entsprechenden Peripherie-Prozessoreinheit verarbeitet und von dort - wie in Fig. 4 gezeigt - als Rückmeldeinformationen I_{R} über ein Rückmeldeinformation-Ausgabemodul 23 an die Endgeräte ausgegeben.

Während in Fig. 4 das Anreizinformation-Empfangsmodul 22 und das Rückmeldeinformation-Ausgabemodul 23 als getrennte Module dargestellt sind, können diese Module durchaus durch ein und dasselbe Modul realisiert werden. In diesem Fall wird somit ein gemeinsames Empfangs- und Ausgabemodul gebildet, welches insbesondere in mehreren Schichten aufgebaut ist, wobei eine Schicht die jeweils ankommenden Informationen protokolliert, eine weitere Schicht eine Datensicherung der ankommenden Informationen durchführt und schließlich eine dritte Schicht für die Übertragung der Informationen entweder zu den endgerätespezifischen Warteschlangen-Speicher 21a - 21n (im Falle der von den Endgeräten zugeführten Anreizinformationen I_{A}) oder zu den Endgeräten (im Falle der von dem Kommunikationssystem auszugebenden Rückmeldeinformationen I_{R}) verantwortlich ist.

Der in Fig. 4 gezeigte Aufbau der in dem Kommunikationssystem vorhandenen Prozessoreinrichtung, insbesondere die Anordnung der einzelnen Programm-Module innerhalb des Systemprozessors 9a der in Fig. 3 gezeigten Peripherie-Prozessoreinrichtung 3a, weist jedoch den Nachteil auf, daß bei einer hohen Anzahl von an die Endgeräte zu übertragenden Rückmeldeinformationen I_{R} eine erhöhte Rechenleistung des gesamten Kommunikationssystems, d.h. der gesamten Nebenstellanlage, erforderlich ist, was zu einer Verlangsamung des Kommunikationssystems führt.

Der vorliegenden Erfindung liegt daher die Aufgabe zugrunde, ein Verfahren sowie ein Kommunikationssystem zu schaffen, wobei problemlos eine große Anzahl von an die Endgeräte zu übertragenden Rückmeldeinformationen bewältigt werden kann, ohne daß dadurch das Kommunikationssystem verlangsamt wird.

Diese Aufgabe wird hinsichtlich des Verfahrens durch ein Verfahren zur Steuerung der Ausgabe von Rückmeldeinformationen nach Anspruch 1 und hinsichtlich des Kommunikationssystems durch ein Kommunikationssystem nach Anspruch 5 gelöst.

Vorteilhafterweise wird allgemein die Ausgabe der von dem Kommunikationssystem an die daran angeschlossenen Endgeräte zu übertragenden Rückmeldeinfomationen abhängig von der Belastung des Kommunikationssystems durch die von den Endgeräten zugeführten Anreizinformationen durchgeführt. Die Ausgabe der Rückmeldeinformationen an die Endgeräte erfolgt dabei periodisch, wobei die Ausgabeperiode abhängig von der Belastung des Kommunikationssystems durch die zugeführten Anreizinformationen der Endgeräte eingestellt wird, d.h. mit steigender Belastung des Kommunikationssystems wird die Ausgabeperiode verlängert.

Die Belastung des Kommunikationssystems durch die von den Endgeräten zugeführten Anreizinformationen wird insbesondere dadurch festgestellt, daß die Belegung der endgerätespezifisch vorgesehenen Wartschlangen-Speicher, die zum Zwischenspeichern der zugeführten Anreizinformationen vorhanden sind, überwacht wird.

Die auszugebenden Rückmeldeinformationen werden abhängig von dem adressierten Endgerät sowie abhängig von der Art der auszugebenden Rückmeldung abgespeichert. Dabei wird erfindungsgemäß zwischen Rückmeldeinformationen für das eigentliche Grundgerät des adressierten Endgeräts und Rückmeldeinformationen für die an das adressierte Endgerät angeschlossenen Konsolen unterschieden. Zudem wird ein endgerätespezifische Information abgespeichert, die angibt, ob für ein bestimmtes Endgerät eine neue Rückmeldeinformation ausgegeben werden soll. An ein Endgerät wird nur dann eine Rückmeldeinformation ausgegeben, wenn auf diese Weise erkannt worden ist, daß tatsächlich eine neue Rückmeldeinformation für das entsprechende Endgerät vorliegt.

Die Unteransprüche beschreiben allgemein vorteilhafte Ausgestaltungen der vorliegenden Erfindung.

Die Erfindung wird nachfolgend anhand eines bevorzugten Ausführungsbeispiels unter Bezugnahme auf die beigefügte Zeichnung näher beschrieben. Dabei zeigt:
Fig. 1 eine schematische Darstellung des Informationsflusses zwischen einer Peripherie-Prozessoreinrichtung und der Hauptprozessoreinrichtung des erfindungsgemäßen Kommunikationssystems,
Fig. 2 die Struktur eines bei dem in Fig. 1 gezeigten Kommunikationssystem verwendeten Rückmeldeinformation-Speichers,
Fig. 3 ein Blockschaltbild mit den wesentlichen Komponenten eines bekannten Kommunikationssystems, wobei dieser Aufbau im wesentlichen auch auf das erfindungsgemäße Kommunikationssystem zutrifft, und
Fig. 4 eine schematische Darstellung des Informationsflusses zwischen einer Peripherie-Prozessoreinrichtung und der Hauptprozessoreinrichtung eines bekannten Kommunikationssystems.

Prinzipiell weist das Kommunikationssystem denselben Aufbau wie das in Fig. 3 gezeigte Kommunikationssystem auf, so daß hinsichtlich des erfindungsgemäßen Kommunikationssystems auf eine wiederholte Beschreibung der in Fig. 3 gezeigten Komponenten verzichtet werden kann.

Ebenso erfolgt bei dem nachfolgend beschriebenen Kommunikationssystem der Empfang von Anreizinformationen I_{A} sowie deren Verarbeitung innerhalb der Systemprozessoren der Peripherie-Prozessoreinrichtung und der Hauptprozessoreinrichtung analog zu dem in Fig. 4 gezeigten Informationsfluß.

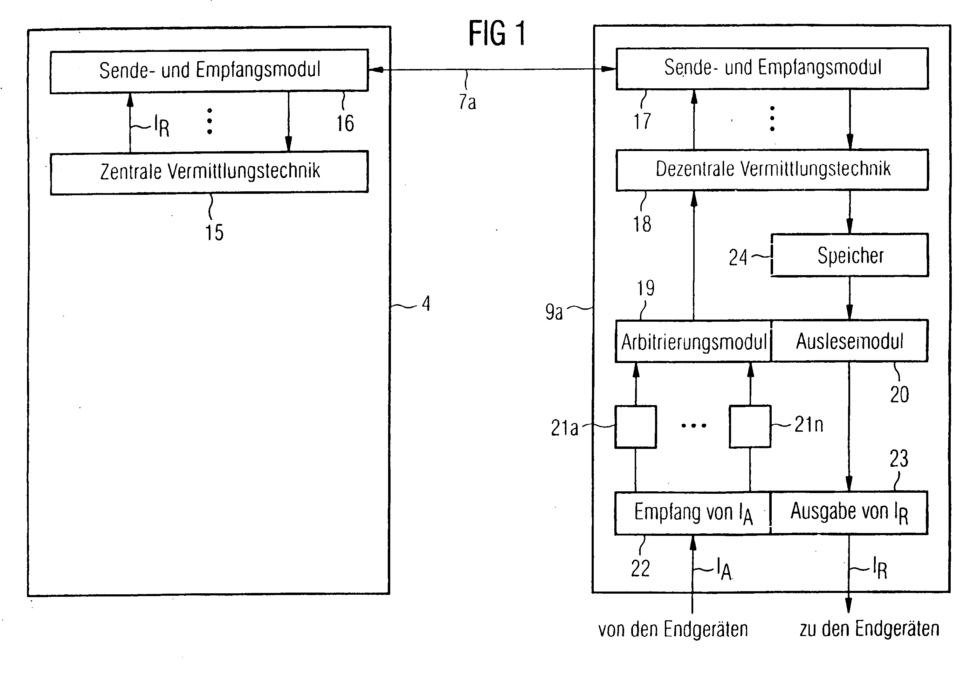

Wie aus Fig. 1 hervorgeht, ist ein Arbitrierungsmodul 19 vorgesehen, welches für die Verteilung der ankommenden Anreizinformationen und somit für einen reibungslosen Betrieb der nachgeschalteten Module verantwortlich ist. Wie bereits anhand Fig. 4 beschrieben worden ist, organisiert das Arbitrierungsmodul 19 eine gerechte und gleichmäßige Behandlung der einzelnen physikalischen Teilnehmeranschlüsse, d.h. Endgeräte, des entsprechenden Peripherie-Prozessors. Da die in Fig. 1 gezeigten endgerätespezifischen Warteschlangen-Speicher 21a - 21n die von den Endgeräten zugeführten Anreizinformationen I_{A} zwischenspeichern und das Arbitrierungsmodul 19 periodisch jeweils einen Wert aus diesen endgerätespezifisch vorgesehenen Warteschlangen-Speichern 21a - 21n ausliest, kann eine durch viele Anreizinformationen I_{A} aufgetretene Lastsituation durch das Arbitrierungsmodul 19 in Verbindung mit den Warteschlangen-Speichern 21a - 21n bewältigt werden.

Sind an das Kommunikationssystem sowohl mobile als auch stationäre Endgeräte angeschlossen, müssen getrennte warteschlangen-Speicher für die mobilen Endgeräte einerseits sowie die stationären Endgeräte andererseits vorgesehen sein.

Das die ankommenden Anreizinformationen I_{A} empfangende Anreizinformation-Empfangsmodul 22 teilt nach Abspeichern einer entsprechenden Anreizinformation in den Warteschlangen-Speichern 21a - 21n diesen Vorgang dem Arbitrierungsmodul 19 mit, woraufhin das Arbitrierungsmodul 19 periodisch die endgerätespezifisch vorgesehenen Warteschlangen-Speicher 21a - 21n durchsucht. Die Aktivierung des Arbitrierungsmoduls 19 kann insbesondere mit Hilfe eines Startflags erfolgen, wobei das Arbitrierungsmodul 19 den Suchvorgang fortsetzt, solange das Flag den Wert TRUE aufweist. Erst wenn ein kompletter Suchlauf des Arbitrierungsmoduls 19 über die endgerätespezifisch vorgesehenen Warteschlangen-Speicher 21a - 21n ergibt, daß in diesen Speichern kein Anreizinformationen I_{A} mehr abgelegt sind, setzt das Arbitrierungsmodul 19 dieses Steuerflag auf den Wert FALSE, so daß der nächste Start des Arbitrierungsmoduls 19 nur durch eine entsprechende Mitteilung seitens des Anreizinformation-Empfangsmoduls 22 nach Abspeichern einer neuen Anreizinformation in einem der Warteschlangen-Speicher 21a - 21n erfolgen kann. Um während dieses Vorgangs einen Prozeßwechsel, d.h. einen Wechsel des ausgeführten Programm-Moduls, zu vermeiden, wird die Prozeßwechselmöglichkeit durch das entsprechende Betriebssystem, beispielsweise das sogenannte COSMOS-Betriebssystem (Communication Oriented Small Modular Operating System), gesperrt.

Die weitere Verarbeitung der in den Warteschlangen-Speichern 21a - 21n abgelegten Anreizinformationen I_{A}, bzw. der darin gespeicherten Adressen der entsprechenden Speicherstellen in dem dem Systemprozessor 9a der Peripherie-Prozessoreinrichtung 3a zugewiesenen Systemspeicher 10a (vergleiche Fig. 3), erfolgt im wesentlichen über das dezentrale Vermittlungstechnikmodul 18, das Sende- und Empfangsmodul 17, das Sende- und Empfangsmodul 16 sowie das zentrale Vermittlungstechnikmodul 15 analog zu dem in Fig. 4 gezeigten bekannten Stand der Technik. Die dem Kommunikationssystem, d.h. der Telefon-Nebenstellenanlage, zugeführten dezentralen Anreizinformationen I_{A} werden dabei von dem dezentralen Vermittlungstechnikmodul 18 der entsprechenden Peripherie-Prozessoreinrichtung verarbeitet, während die zentralen Anreizinformationen I_{A} von der Peripherie-Prozessoreinrichtung über die Datenstrecke 7a an die Hauptprozessoreinrichtung übertragen und dort von dem zentralen Vermittlungstechnikmodul 15 verarbeitet werden.

Erfindungsgemäß wird eine lastabhängige Steuerung der Ausgabe von Rückmeldeinformationen I_{R} an die an das Kommunikationssystem angeschlossenen Endgeräte vorgeschlagen. Dabei werden bevorzugterweise die Rückmeldeinformationen, d.h. beispielsweise Zustandsinformationen, periodisch von dem Kommunikationssystem an die Endgeräte ausgegeben, wobei die ansich zeitunkritische Ausgabe dieser Rückmeldeinformationen I_{R} verlangsamt wird, wenn die Belastung des Kommunikationssystems durch die von den Endgeräten gelieferten Anreizinformationen zunimmt.

Diese Steuerung der Ausgabe der Rückmeldeinformationen I_{R}, die insbesondere als Leuchtdioden-Zustandsmeldungen an die Endgeräte zu übertragen sind, wird nachfolgend anhand des in Fig. 1 gezeigten Systemprozessors 9a der in Fig. 3 gezeigten Peripherie-Prozessoreinrichtung 3a erläutert. Die vorliegende Erfindung ist jedoch nicht darauf beschränkt, daß die Steuerung der Ausgabe der Rückmeldeinformationen ausschließlich in einer Peripherie-Prozessoreinrichtung erfolgt, sondern kann durchaus auch auf die in Fig. 3 gezeigte Hauptprozessoreinrichtung 2 angewendet werden, da in der Regel die an die Endgeräte auszugebenden Rückmeldeinformationen durch das zentrale Vermittlungstechnikmodul 15 des Systemprozessors 4 der in Fig. 3 gezeigten Hauptprozessoreinrichtung 2 erzeugt werden. Erfindungsgemäß wird somit allgemein vorgeschlagen, daß die Steuerung der Rückmeldeinformationsausgabe generell in einer Prozessoreinrichtung erfolgt, wobei die Prozessoreinrichtung allgemein die in Fig. 3 gezeigte Prozessoreinrichtung 2 sowie die Peripherie-Prozessoreinrichtungen 3a und 3b umfaßt.

Wie in Fig. 1 gezeigt, ist zusätzlich zu dem aus Fig. 4 bekannten Aufbau ein Rückmeldeinformation-Speicher 24 sowie ein Rückmeldeinformation-Auslesemodul 20 vorgesehen. Die an die Endgeräte zu übertragenden Rückmeldeinformationen I_{R}, d.h. die auszugebenden Zustandsmeldungen, werden in der Regel von dem zentralen Vermittlungstechnikmodul 15 des Systemprozessors 4 der Hauptprozessoreinrichtung 2 erzeugt. Die auszugebende Rückmeldeinformationen können jedoch auch von dem dezentralen Vermittlungstechnikmodul 18 einer jeden Peripherie-Prozessoreinrichtung oder allgemein an beliebiger Stelle der Hauptprozessoreinrichtung 2 oder einer Peripherie-Prozessoreinrichtung 3a, 3b erzeugt werden.

Die von dem in Fig. 1 gezeigten zentralen Vermittlungstechnikmodul 15 erzeugten Rückmeldeinformationen I_{R} werden von einem Sende- und Empfangsmodul 16 des Systemprozessors 4 der Hauptprozessoreinrichtung 2 (vergleiche Fig. 3) über die in Fig. 4 gezeigte HDLC-Datenübertragungsstrecke 7a an die entsprechende Peripherie-Prozessoreinrichtung übertragen. Dort werden diese Rückmeldeinformationen I_{R} von der in Fig. 3 gezeigten Peripherie-Steuerung 11a empfangen und anschließend in dem Rückmeldeinformation-Speicher 24 abgelegt.

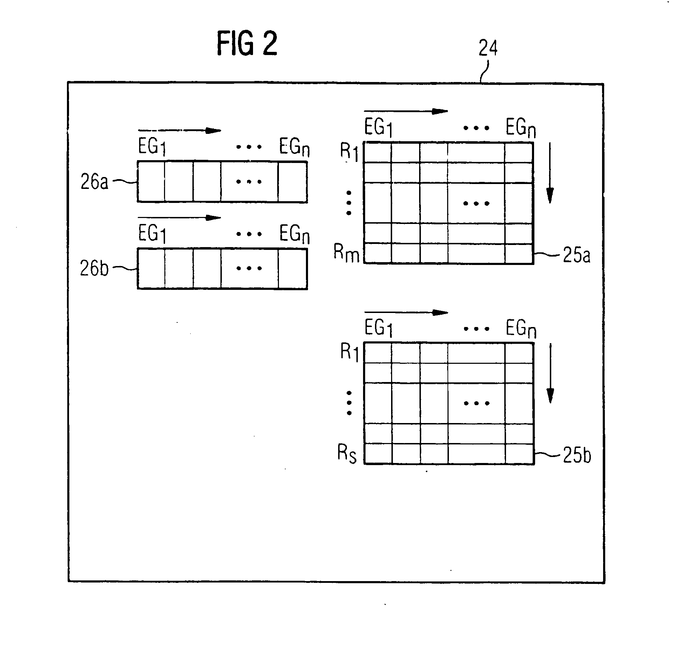

Die Struktur des Rückmeldeinformation-Speichers 24 ist in Fig. 2 dargestellt. Vorteilhafterweise werden die auszugebenden Rückmeldeinformationen I_{R} in zwei Matrizen 25a und 25b eingetragen. In die eine Matrix 25a werden die Rückmeldeinformationen I_{R} abhängig von dem durch die entsprechende Rückmeldeinformation adressierten Endgerät bzw. Teilnehmeranschluß des Kommunikationssystems EG₁ - EGₙ sowie abhängig von der Art, d.h. dem Typ der auszugebenden Rückmeldung abgespeichert. Gemäß Fig. 2 sind dabei an die entsprechende Peripherie-Prozessoreinrichtung n Endgeräte anschließbar und es wird zwischen m Rückmeldeinformationsarten R unterschieden.

In die Matrix 25a werden auf diese Weise Rückmeldeinformationen enderätespezifisch sowie rückmeldeinformationsspezifisch eingetragen, die die eigentlichen Grundgeräte der angeschlossenen Endgeräte betreffen. Diese Rückmeldeinformationen können beispielsweise allgemein Funktionen oder Dienste des Endgerätes kennzeichnen.

In die zweite Matrix 25b werden auf analoge Art und Weise Rückmeldeinformationen I_{R} endgerätespezifisch und rückmeldeinformationsspezifisch eingetragen, die Konsolen betreffen, die an die einzelnen Endgeräte anschließbar sind. Diese Rückmeldeinformationen, die die Konsolen der einzelnen Endgeräte betreffen, können beispielsweises Zusatzfunktionen des Endgeräts für die Kommunikation mit einer Sekretärin betreffen. Die Konsolen werden im allgemeinen auch als sogenannte Optionen bezeichnet. Gemäß Fig. 2 werden s unterschiedliche Rückmeldungsarten bzgl. der die Konsolen (Optionen) betreffenden Matrix 25b berücksichtigt.

Aus Fig. 2 ist ersichtlich, daß die Matrizen 25a und 25b zweidimensional sind, wobei die erste Dimension dem Teilnehmeranschluß und die zweite Dimension der Rückmeldungsnummer entspricht. Wird beispielsweise angenommen, daß an die entsprechende Peripherie-Prozessoreinrichtung 32 Grundgeräte mit jeweils maximal zwei Konsolen (Optionen) pro Grundgerät angeschlossen sind und pro Grundgerät zwölf verschiedene Rückmeldungen bzw. Zustandsmeldungen und pro Konsole sechzehn unterschiedliche Rückmeldungen bzw. Zustandsmeldungen möglich sind (n = 32, m = 12 und s = 16), ergibt sich folgender Speicherbedarf für die Matrizen:

Gesamtspeicherbedarf = n x (m + s x 2) = 32 x (12 16 x 2) = 1408 Byte.

Gemäß Fig. 1 ist zudem ein Rückmeldeinformation-Auslesemodul 20 vorgesehen, welches nun zeitgesteuert zyklisch, d.h. periodisch, die beiden Matrizen 25a und 25b des Rückmeldeinformation-Speichermoduls 24 durchsucht.

Damit die Matrizen 25a und 25b nicht für Grundgeräte oder Konsolen durchsucht werden, die nicht angeschlossen sind oder für die keine oder keine neuen Rückmeldungen eingegangen sind, sind in dem Speicher 24 zusätzlich zwei eindimensionale Arrays 26a bzw. 26b für die einzelnen Grundgeräte bzw. Konsolen abgespeichert. In diesen Arrays setzt die Peripherie-Steuerung für jeden Teilnehmeranschluß EG₁ - EGₙ ein Flag, wenn die Peripherie-Steuerung für den entsprechenden Teilnehmeranschluß eine Rückmeldeinformation in die entsprechende Matrix 25a bzw. 25b eingetragen hat.

Für die Flagsteuerung ist pro Endgerät nochmals ein Speicherbedarf von 2 Byte erforderlich.

Das in Fig. 1 gezeigte Rückmeldeinformation-Auslesemodul 20 durchsucht somit nur dann die Matrizen 25a bzw. 25b, wenn es bei seinem Durchlauf über die beiden Arrays 26a bzw. 26b ein gesetztes Flag entdeckt hat. Insbesondere durchsucht das Rückmeldeinformation-Auslesemodul 20 nur diejenigen Spalten der Matrizen 25a und 25b, für die es in dem entsprechenden Array 26a bzw. 26b ein gesetztes Flag entdeckt hat. Nach Durchsuchen dieser Spalten der Matrizen 25a und 25b erzeugt das Rückmeldeinformation-Auslesemodul 20 die entsprechende Rückmeldung und überträgt sie an das Rückmeldeinformation-Ausgabemodul 23, welches die Rückmeldeinformation I_{R} an das entsprechende Endgerät weiterleitet. Nachdem das Rückmeldeinformation-Auslesemodul 20 die entsprechende Rückmeldeinformation erzeugt und an das Rückmeldeinformation-Ausgabemodul 23 übertragen hat, wird das Flag in dem entsprechenden Array 26a bzw. 26b gelöscht.

Wie bereits oben beschrieben worden ist, durchsucht das Rückmeldeinformation-Auslesemodul 20 zeitgesteuert zyklisch, d.h. periodisch, den Inhalt des Rückmeldeinformation-Speichers 24. Erfindungsgemäß wird vorgeschlagen, die Ausleseperiode des Rückmeldeinformation-Auslesemoduls 20 abhängig von der Belastung des Kommunikationssystems durch die von den Endgeräten gelieferten Anreizinformationen I_{A} einzustellen. D.h., bei einer erhöhten Belastung des Kommunikationssystems wird die Zeit zwischen zwei Durchläufen des Rückmeldeinformation-Auslesemoduls 20 über die Arrays 26a und 26b des Rückmeldeinformation-Speichermoduls 24 verlängert. Zudem wird zwischen Rückmeldeinformationen für die eigentlichen Grundgeräte und denen für die an die Grundgeräte anschließbaren Konsolen unterschieden. Da sich im allgemeinen die Rückmeldeinformationen für die an die Grundgeräte anschließbaren Konsolen weniger schnell ändern, wird vorteilhafterweise vorgeschlagen, grundsätzlich die Zeit zwischen zwei Durchläufen über das in Fig. 2 gezeigte für die Konsolen vorgesehene Array 26b länger einzustellen als die entsprechende Zeit zwischen zwei Durchläufen über das für die Grundgeräte vorgesehene Array 26a.

Um die Belastung des Kommunikationssystems durch die von den Endgeräten gelieferten Anreizinformationen I_{A} erfassen zu können, wird vorgeschlagen, die Belegung der Warteschlangen-Speicher 21a - 21n, welche für die Zwischenspeicherung oder Pufferung der Anreizinformationen vorgesehen sind, als Maß für die Belastung des Kommunikationssystems auszuwerten. Insbesondere wird als Maß für die Belastung des Kommunikationssystems diejenige Anzahl von Anreizinformationen ausgewertet, die bei einem Durchlauf des Arbitrierungsmoduls 19 über die endgerätespezifisch vorgesehenen Warteschlangen-Speicher 21a - 21n aufgefunden werden. Abhängig von dieser Anreizinformationsanzahl wird entsprechend die Ausleseperiode des Rückmeldeinformation-Auslesemoduls 20 eingestellt, d.h. bei einer hohen Anzahl von Anreizinformationen wird die Ausleseperiode verlängert und bei einer niedrigen Anzahl von Anreizinformationen wird die Ausleseperiode verkürzt.

Da die Ausgabe der einzelnen Rückmeldeinformationen, d.h. Zustandsmeldungen, an sich zeitunkritisch ist, wird aufgrund der erfindungsgemäßen Lösung selbst bei einer hohen Belastung des Kommunikationssystems vermieden, daß für die Ausgabe der Rückmeldeinformationen eine höhere Rechenleistung des Kommunikationssystems benötigt wird, so daß das Kommunikationssystem, d.h. die Nebenstellenanlage, selbst bei einer hohen Belastung nicht verlangsamt wird.

Abschließend sei darauf hingewiesen, daß in der Regel das in Fig. 1 gezeigte Rückmeldeinformation-Auslesemodul 20 sowie das Arbitrierungsmodul 19 durch ein und dasselbe Modul realisiert sind. D.h. es ist ein Arbitrierungsmodul vorgesehen, welches einerseits sowohl für das Auslesen der Anreizinformationen I_{A} aus den endgerätespezifischen Warteschlangen-Speicher 21a - 21n als auch für das Auslesen der Rückmeldeinformationen I_{R} aus dem Rückmeldeinformation-Speicher 24 verantwortlich ist.

## Patentansprüche

1. Verfahren zur Steuerung der Ausgabe von Rückmeldeinformationen (I_{R}) von einem Kommunikationssystem (1), insbesondere einer Telefon-Nebenstellenanlage, an Endgeräte (13a - 13d), die an das Kommunikationssystem angeschlossen sind,
wobei das Kommunikationssystem von den Endgeräten im Rahmen einer Verbindungssignalisierung Anreizinformationen (I_{A}) empfängt,
**dadurch gekennzeichnet,**
**daß** die Ausgabe der Rückmeldeinformationen (I_{R}) abhängig von der Belastung des Kommunikationssystems (1) durch die von den Endgeräten (13a - 13d) zugeführten Anreizinformationen (I_{A}) erfolgt,
wobei das Kommunikationssystem (1) die Rückmeldeinformationen (I_{R}) periodisch an die daran angeschlossenen Endgeräte (13a - 13d) ausgibt und wobei die Ausgabeperiode abhängig von der Belastung des Kommunikationssystems durch die von den Endgeräten zugeführten Anreizinformationen (I_{A}) erfolgt.

2. Verfahren nach Anspruch 1,
**dadurch gekennzeichnet,**
**daß** die Ausgabeperiode der Rückmeldeinformationen (I_{R}) mit steigender Belastung des Kommunikationssystems (1) durch die an dem Kommunikationssystem anliegenden Anreizinformationen (I_{A}) verlängert wird.

3. Verfahren nach einem der vorhergehenden Ansprüche,
**dadurch gekennzeichnet,**
**daß** an ein Endgerät (13a - 13d) nur dann eine Rückmeldeinformation (I_{R}) ausgegeben wird, falls für das entsprechende Endgerät in dem Kommunikationssystem (1) eine neue Rückmeldung erzeugt worden ist.

4. Kommunikationssystem (1), insbesondere Telefon-Nebenstellenanlage, wobei an das Kommunikationssystem eine Vielzahl von Endgeräten (13a - 13d) anschließbar sind, die im Rahmen einer Verbindungssignalisierung Anreizinformationen (I_{A}) an das Kommunikationssystem übermitteln,
mit einer Prozessoreinrichtung (2, 3a, 3b), die umfaßt:
- ein Anreizinformation-Empfangsmodul (22) zum Empfangen der von den Endgeräten übermittelten Anreizinformationen, und
- ein Rückmeldeinformation-Ausgabemodul (23) zum Ausgeben von Rückmeldeinformationen (I_{R}) des Kommunikationssystems an die Endgeräte,
**dadurch gekennzeichnet,**
**daß** die Prozessoreinrichtung (2, 3a, 3b) des weiteren umfaßt:
- einen Rückmeldeinformationsspeicher (24) zum Zwischenspeichern der auszugebenden Rückmeldeinformationen (I_{R}),und
- ein Rückmeldeinformation-Auslesemodul (20) zum periodischen und Auslesen der in dem Rückmeldeinformationsspeicher (24) zwischengespeicherten Rückmeldeinformationen (I_{R}),
wobei die Ausleseperiode des Rückmeldeinformation-Auslesemoduls (20) abhängig von der Anzahl der dem Anreizinformation-Empfangsmodul (23) von den Endgeräten (13a - 13d) übermittelten Anreizinformationen (I_{A}) ist.

5. Kommunikationssystem nach Anspruch 4,
**dadurch gekennzeichnet,**
**daß** die Ausleseperiode des Rückmeldeinformation-Auslesemoduls (20) mit steigender Anzahl der von den Endgeräten (13a - 13d) übermittelten Anreizinformationen verlängert wird.

6. Kommunikationssystem nach Anspruch 4 oder 5,
**dadurch gekennzeichnet,**
**daß** der Rückmeldeinformationsspeicher (20) die auszugebenden Rückmeldeinformationen (I_{R}) abhängig von den Endgeräten (13a - 13d), an die die entsprechenden Rückmeldeinformationen auszugeben sind, und abhängig von der Art der auszugebenden Rückmeldeinformation speichert, insbesondere in Form einer Matrix (25a).

7. Kommunikationssystem nach einem der Ansprüche 4 - 6,
**dadurch gekennzeichnet,**
**daß** der Rückmeldeinformationsspeicher (24) eine endgerätespezifische Information, insbesondere in Form eines Arrays (26a), speichert, wenn für ein bestimmtes Endgerät (13a - 13d) eine neue Rückmeldeinformation (I_{R}) auszugeben ist.

8. Kommunikationssystem nach Anspruch 7,
**dadurch gekennzeichnet,**
**daß** das Rückmeldeinformation-Auslesemodul (20) für ein bestimmtes Endgerät (13a - 13d) nur dann eine Rückmeldeinformation (I_{R}) aus dem Rückmeldeinformationsspeicher (24) ausliest, falls die entsprechende endgerätespezifische Information (26a) das Vorliegen einer neuen Rückmeldeinformation für das bestimmte Endgerät in dem Rückmeldeinformationsspeicher anzeigt.

9. Kommunikationssystem nach einem der Ansprüche 4 - 8,
**dadurch gekennzeichnet,**
**daß** der Rückmeldeinformationsspeicher (24) die auszugebenden Rückmeldeinformationen (I_{R}) getrennt nach die Endgeräte (13a - 13d) betreffenden Rückmeldeinformationen und nach Zusatzkonsolen (14a - 14d) für die Endgeräte betreffenden Rückmeldeinformationen speichert.

10. Kommunikationssystem nach Anspruch 9,
**dadurch gekennzeichnet,**
**daß** die Ausleseperiode des Rückmeldeinformation-Auslesemoduls (20) für die die Zusatzkonsolen (14a - 14d) betreffenden Rückmeldeinformationen (I_{R}) länger ist als für die die Endgeräte (13a - 13d) betreffenden Rückmeldeinformationen.

11. Kommunikationssystem nach einem der Ansprüche 4 - 10,
**dadurch gekennzeichnet,**
**daß** das Anreizinformation-Empfangsmodul (22) die von den Endgeräten (13a - 13d) übermittelten Anreizinformationen (I_{A}) endgerätespezifisch in Warteschlangen-Speicher (21a - 21n) abspeichert, und
**daß** die Prozessoreinrichtung (2, 3a, 3b) ein Arbitrierungsmodul (19) zum endgerätespezifischen Verarbeiten der in den Warteschlangen-Speichern (21a - 21n) zwischengespeicherten Anreizinformationen aufweist.

12. Kommunikationssystem nach Anspruch 11,
**dadurch gekennzeichnet,**
**daß** das Rückmeldeinformation-Auslesemodul (20) und das Arbitrierungsmodul (19) durch ein und dasselbe Modul gebildet sind.

13. Kommunikationssystem nach Anspruch 11 oder 12,
**dadurch gekennzeichnet,**
**daß** die Ausleseperiode des Rückmeldeinformation-Auslesemoduls (20) abhängig von dem Belegungsgrad der endgerätespezifischen Warteschlangen-Speicher (21a - 21n) eingestellt wird, wobei der Belegungsgrad der endgerätespezifischen Warteschlangen-Speicher (21a - 21n) als Maß für die Anzahl der von den Endgeräten (13a - 13d) übermittelten Anreizinformationen (I_{A}) ausgewertet wird.

14. Kommunikationssystem nach einem der Ansprüche 4 - 13,
**dadurch gekennzeichnet,**
**daß** das Anreizinformation-Empfangsmodul (22) und das Rückmeldeinformation-Ausgabemodul (23) durch ein und dasselbe Modul gebildet sind.

15. Kommunikationssystem nach einem der Ansprüche 4 - 14,
**dadurch gekennzeichnet,**
**daß** die Prozessoreinrichtung einen Hauptprozessor (2) und mindestens einen Peripherie-Prozessor (3a, 3b) umfaßt,
wobei die an die Endgeräte (13a - 13d) auszugebenden Rückmeldeinformationen (I_{R}) von dem Hauptprozessor erzeugt und über eine Datenübertragungsstrecke (7a, 7b) an den entsprechenden Peripherie-Prozessor (3a, 3b) übertragen werden, und
wobei jeder Peripherie-Prozessor (3a, 3b) ein Anreizinformation-Empfangsmodul (22), ein Rückmeldeinformation-Ausgabemodul (23), einen Rückmeldeinformationsspeicher (24) und ein Rückmeldeinformation-Auslesemodul (20) nach einem der Ansprüche 5 - 15 sowie eine Peripherie-Steuerung (11a, 11b) aufweist, wobei die Peripherie-Steuerung die von dem Hauptprozessor (2) übertragenen Rückmeldeinformationen (I_{R}) und in dem Rückmeldeinformationsspeicher (24) des entsprechenden Peripherie-Prozessors (3a, 3b) abspeichert.

16. Kommunikationssystem nach Anspruch 15,
**dadurch gekennzeichnet,**
**daß** die einzelnen Module eines jeden Peripherie-Prozessors (3a, 3b) als Programm-Module vorhanden sind.

## Claims

1. Method for controlling the outputting of acknowledgement information items (I_{R}) from a communications system (1), in particular a telephone private branch exchange, to terminals (13a-13d) connected to the communications system,
wherein the communications system receives event information items (I_{A}) from the terminals in the context of a connection signalling,
**characterized**
**in that** the outputting of the acknowledgement information items (I_{R}) is effected depending on the loading of the communications system (1) by the event information items (I_{A}) fed from the terminals (13a-13d),
wherein the communications system (1) outputs the acknowledgement information items (I_{R}) periodically to the terminals (13a-13d) connected to it, and wherein the outputting period is effected depending on the loading of the communications system by the event information items (I_{A}) fed from the terminals.

2. Method according to Claim 1,
**characterized**
**in that** the outputting period of the acknowledgement information items (I_{R}) is lengthened with increasing loading of the communications system (1) by the event information items (I_{A}) present at the communications system.

3. Method according to one of the preceding claims,
**characterized**
**in that** an acknowledgement information item (I_{R}) is output to a terminal (13a-13d) only if a new acknowledgement message has been generated for the corresponding terminal in the communications system (1).

4. Communications system (1), in particular telephone private branch exchange, wherein a multiplicity of terminals (13a-13d) can be connected to the communications system, said terminals communicating event information items (I_{A}) to the communications system in the context of a connection signalling,
comprising a processor device (2, 3a, 3b) comprising:
- an event information receiving module (22) for receiving the event information items communicated by the terminals, and
- an acknowledgement information output module (23) for outputting acknowledgement information items (I_{R}) of the communications system to the terminals,
**characterized**
**in that** the processor device (2, 3a, 3b) furthermore comprises:
- an acknowledgement information memory (24) for buffer-storing the acknowledgement information items (I_{R}) to be output, and
- an acknowledgement information read-out module (20) for periodically reading out the acknowledgement information items (I_{R}) buffer-stored in the acknowledgement information memory (24),
wherein the read-out period of the acknowledgement information read-out module (20) is dependent on the number of event information items (I_{A}) communicated to the event information receiving module (22) by the terminals (13a-13d).

5. Communications system according to Claim 4,
**characterized**
**in that** the read-out period of the acknowledgement information read-out module (20) is lengthened as the number of event information items communicated by the terminals (13a-13d) increases.

6. Communications system according to Claim 4 or 5,
**characterized**
**in that** the acknowledgement information memory (20) stores the acknowledgement information items (I_{R}) to be output depending on the terminals (13a-13d) to which the corresponding acknowledgement information items are to be output, and depending on the type of acknowledgement information to be output, in particular in the form of a matrix (25a).

7. Communications system according to one of Claims 4-6,
**characterized**
**in that** the acknowledgement information memory (24) stores a terminal-specific information item, in particular in the form of an array (26a), if a new acknowledgement information item (I_{R}) is to be output for a specific terminal (13a-13d).

8. Communications system according to Claim 7,
**characterized**
**in that** the acknowledgement information read-out module (20) reads out an acknowledgement information item (I_{R}) from the acknowledgement information memory (24) for a specific terminal (13a-13d) only if the corresponding terminal-specific information item (26a) indicates the presence of a new acknowledgement information item for the specific terminal in the acknowledgement information memory.

9. Communications system according to one of Claims 4-8,
**characterized**
**in that** the acknowledgement information memory (24) stores the acknowledgement information items (I_{R}) to be output separately according to acknowledgement information items concerning the terminals (13a-13d) and according to acknowledgement information items concerning additional consoles (14a-14d) for the terminals.

10. Communications system according to Claim 9,
**characterized**
**in that** the read-out period of the acknowledgement information read-out module (20) is longer for the acknowledgement information items (I_{R}) concerning the additional consoles (14a-14d) than for the acknowledgement information items concerning the terminals (13a-13d).

11. Communications system according to one of Claims 4-10,
**characterized**
**in that** the event information receiving module (22) stores the event information items (I_{A}) communicated by the terminals (13a-13d) in a terminal-specific manner in queue memories (21a-21n), and
**in that** the processor device (2, 3a, 3b) has an arbitration module (19) for the terminal-specific processing of the event information items buffer-stored in the queue memories (21a-21n).

12. Communications system according to Claim 11,
**characterized**
**in that** the acknowledgement information read-out module (20) and the arbitration module (19) are formed by one and the same module.

13. Communications system according to Claim 11 or 12,
**characterized**
**in that** the read-out period of the acknowledgement information read-out module (20) is set depending on the degree of occupancy of the terminal-specific queue memories (21a-21n), wherein the degree of occupancy of the terminal-specific queue memories (21a-21n) is evaluated as a measure of the number of event information items (I_{A}) communicated by the terminals (13a-13d).

14. Communications system according to one of Claims 4-13,
**characterized**
**in that** the event information receiving module (22) and the acknowledgement information output module (23) are formed by one and the same module.

15. Communications system according to one of Claims 4-14,
**characterized**
**in that** the processor device comprises a main processor (2) and at least one peripheral processor (3a, 3b),
wherein the acknowledgement information items (I_{R}) to be output to the terminals (13a-13d) are generated by the main processor and transmitted to the corresponding peripheral processor (3a, 3b) via a data transmission link (7a, 7b), and
wherein each peripheral processor (3a, 3b) has an event information receiving module (22), an acknowledgement information output module (23), an acknowledgement information memory (24) and an acknowledgement information read-out module (20) according to one of Claims 5-15 and also a peripheral controller (11a, 11b), wherein the peripheral controller stores the acknowledgement information items (I_{R}) transmitted by the main processor (2) in the acknowledgement information memory (24) of the corresponding peripheral processor (3a, 3b).

16. Communications system according to Claim 15,
**characterized**
**in that** the individual modules of each peripheral processor (3a, 3b) are present as program modules.

## Revendications

1. Procédé pour la commande de la fourniture d'informations de retour (I_{R}) d'un système de communication (1), notamment d'un central téléphonique privé, à des terminaux (13a à 13d) qui sont raccordés au système de communication,
le système de communication recevant des terminaux, dans le cadre d'une signalisation de liaison, des informations de stimulation (I_{A}),
**caractérisé par le fait que**
la fourniture des informations de retour (I_{R}) est effectuée en fonction de la charge du système de communication (1) par les informations de stimulation (I_{A}) envoyées par les terminaux (13a à 13d),
le système de communication (1) fournissant périodiquement les informations de retour (I_{R}) aux terminaux raccordés (13a à 13d) et la période de fourniture étant réglée en fonction de la charge du système de communication par les informations de stimulation (I_{A}) envoyées par les terminaux.

2. Procédé selon la revendication 1,
**caractérisé par le fait que** la période de fourniture des informations de retour (I_{R}) est prolongée en cas d'augmentation de la charge du système de communication (1) par les informations de stimulation (I_{A}) arrivant au système de communication.

3. Procédé selon l'une des revendications précédentes,
**caractérisé par le fait qu'**une information de retour (I_{R}) n'est fournie à un terminal (13a à 13d) que si un nouveau message en retour a été produit pour le terminal correspondant dans le système de communication (1).

4. Système de communication (1), notamment central téléphonique privé, plusieurs terminaux (13a à 13d) pouvant être raccordés au système de communication, lesquels terminaux transmettent des informations de stimulation (I_{A}) au système de communication dans le cadre d'une signalisation de liaison,
comprenant un dispositif processeur (2, 3a, 3b) qui comprend :
- un module de réception d'informations de stimulation (22) pour la réception des informations de stimulation transmises par les terminaux, et
- un module de fourniture d'informations de retour (23) pour la fourniture d'informations de retour (I_{R}) du système de communication aux terminaux,
**caractérisé par le fait que**
le dispositif processeur (2, 3a, 3b) comprend aussi :
- une mémoire d'informations de retour (24) pour la mémorisation temporaire des informations de retour à fournir (I_{R}), et
- un module de lecture d'informations de retour (20) pour la lecture périodique des informations de retour (I_{R}) mémorisées temporairement dans la mémoire d'informations de retour (24),
la période de lecture du module de lecture d'informations de retour (20) dépendant du nombre des informations de stimulation (I_{A}) transmises au module de réception d'informations de stimulation (23) par les terminaux (13a à 13d).

5. Système de communication selon la revendication 4,
**caractérisé par le fait que** la période de lecture du module de lecture d'informations de retour (20) est prolongée en cas d'augmentation du nombre des informations de stimulation transmises par les terminaux (13a à 13d).

6. Système de communication selon la revendication 4 ou 5,
**caractérisé par le fait que** la mémoire d'informations de retour (20) mémorise les informations de retour à fournir (I_{R}) en fonction des terminaux (13a à 13d) auxquels les informations de retour correspondantes sont à fournir et en fonction du type de l'information de retour à fournir, notamment sous la forme d'une matrice (25a).

7. Système de communication selon l'une des revendications 4 à 6,
**caractérisé par le fait que** la mémoire d'informations de retour (24) mémorise une information spécifique au terminal, notamment sous la forme d'un tableau (26a), lorsqu'une nouvelle information de retour (I_{R}) est à fournir pour un certain terminal (13a à 13d).

8. Système de communication selon la revendication 7,
**caractérisé par le fait que** le module de lecture d'informations de retour (20) ne lit pour un certain terminal (13a à 13d) une information de retour (I_{R}) dans la mémoire d'informations de retour (24) que si l'information correspondante (26a) spécifique au terminal indique la présence d'une nouvelle information de retour pour ledit terminal dans la mémoire d'informations de retour.

9. Système de communication selon l'une des revendications 4 à 8,
**caractérisé par le fait que** la mémoire d'informations de retour (24) mémorise les informations de retour à fournir (I_{R}) séparément en informations de retour concernant les terminaux (13a à 13d) et en informations de retour concernant des consoles supplémentaires (14a à 14d) pour les terminaux.

10. Système de communication selon la revendication 9,
**caractérisé par le fait que** la période de lecture du module de lecture d'informations de retour (20) pour les informations de retour (I_{R}) concernant les consoles supplémentaires (14a à 14d) est plus longue que celle pour les informations de retour concernant les terminaux (13a à 13d).

11. Système de communication selon l'une des revendications 4 à 10,
**caractérisé par le fait que**
le module de réception d'informations de stimulation (22) mémorise les informations de stimulation (I_{A}) transmises par les terminaux (13a à 13d) dans des mémoires à file d'attente (21a à 21n) de manière spécifique au terminal, et
le dispositif processeur (2, 3a, 3b) comporte un module d'arbitrage (19) pour le traitement, spécifique au terminal, des informations de stimulation mémorisées temporairement dans les mémoires à file d'attente (21a à 21n).

12. Système de communication selon la revendication 11,
**caractérisé par le fait que** le module de lecture d'informations de retour (20) et le module d'arbitrage (19) sont formés par un seul et même module.

13. Système de communication selon la revendication 11 ou 12,
**caractérisé par le fait que** la période de lecture du module de lecture d'informations de retour (20) est réglée en fonction de la charge des mémoires à file d'attente (21a à 21n) spécifiques aux terminaux, la charge des mémoires à file d'attente (21a à 21n) spécifiques aux terminaux étant évaluée comme mesure pour le nombre des informations de stimulation (I_{A}) transmises par les terminaux (13a à 13d).

14. Système de communication selon l'une des revendications 4 à 13,
**caractérisé par le fait que** le module de réception d'informations de stimulation (22) et le module de fourniture d'informations de retour (23) sont formés par un seul et même module.

15. Système de communication selon l'une des revendications 4 à 14,
**caractérisé par le fait que**
le dispositif processeur comprend un processeur principal (2) et au moins un processeur périphérique (3a, 3b),
les informations de retour (I_{R}) à fournir aux terminaux (13a à 13d) étant produites par le processeur principal et étant transmises par l'intermédiaire d'une voie de transmission de données (7a, 7b) au processeur périphérique correspondant (3a, 3b), et
chaque processeur périphérique (3a, 3b) comportant un module de réception d'informations de stimulation (22), un module de fourniture d'informations de retour (23), une mémoire d'informations de retour (24) et un module de lecture d'informations de retour (20) selon l'une des revendications 5 à 15 ainsi qu'une commande périphérique (11a, 11b), la commande périphérique mémorisant les informations de retour (I_{R}) transmises par le processeur principal (2) dans la mémoire d'informations de retour (24) du processeur périphérique correspondant (3a, 3b).

16. Système de communication selon la revendication 15,
**caractérisé par le fait que** les différents modules de chaque processeur périphérique (3a, 3b) étant présents sous forme de modules programmes.
